# EUROPÄISCHE PATENTSCHRIFT

(11) **EP 1 131 651 B1**
(45) Veröffentlichungstag und Bekanntmachung des Hinweises auf die Patenterteilung: **11.02.2004**
(21) Anmeldenummer: 00963991.5
(22) Anmeldetag: 21.09.2000
(51) Int. Cl.: G01S 7/40, G01S 7/497

(54) **VERFAHREN UND VORRICHTUNG ZUR ZUSTANDSERKENNUNG BEI EINEM SYSTEM ZUR AUTOMATISCHEN LÄNGS- UND/ODER QUERREGELUNG BEI EINEM KRAFTFAHRZEUG**
METHOD AND DEVICE FOR IDENTIFYING THE STATE OF A SYSTEM FOR EFFECTING THE AUTOMATIC LONGITUDINAL AND/OR LATERAL CONTROL OF A MOTOR VEHICLE
PROCEDE ET DISPOSITIF DE RECONNAISSANCE D'ETAT DANS UN SYSTEME DE REGULATION LONGITUDINALE ET/OU TRANSVERSALE AUTOMATIQUE MONTE DANS UN VEHICULE AUTOMOBILE

(30) Priorität: 21.09.1999 DE 19945250
(43) Veröffentlichungstag der Anmeldung: 12.09.2001
(73) Patentinhaber: ROBERT BOSCH GMBH, 70442 Stuttgart (DE)
(72) Erfinder: LEHRE, Klaus, 76316 Malsch (DE); STORTZ, Christiane, 77746 Schutterwald (DE); MARCHTHALER, Reiner, 73333 Gingen (DE); WINTER, Klaus, 71701 Schwieberdingen (DE); MAIER, Dietmar, 84095 Furth b. Landshut (DE); SAUER, Thomas, 80804 München (DE)
(86) Internationale Anmeldenummer: PCT/DE2000/003286
(87) Internationale Veröffentlichungsnummer: WO 2001/022113

(56) Entgegenhaltungen:
- EP-A- 1 026 514
- DE-A- 19 644 164
- DE-A- 19 832 800
- DE-A- 19 929 794
- US-A- 5 839 096

## Beschreibung

Die vorliegende Erfindung betrifft ein Verfahren und eine Vorrichtung zur Zustandserkennung bei einem System zur automatischen Längs- und/oder Querregelung bei einem Kraftfahrzeug. Solche Systeme werden beispielsweise im Rahmen einer automatischen Geschwindigkeitsregelung eines Fahrzeugs zur Detektion vorausfahrender Fahrzeuge eingesetzt. Bei diesen Systemen (z.B. Adaptive Cruise. Control) wird die herkömmliche Geschwindigkeitsregelung um einen Abstandssensor erweitert, so daß eine automatische Geschwindigkeits- und/oder Abstandsanpassung an die vorausliegende Verkehrssituation möglich ist. Um bei einem solchen System einen zuverlässigen Einsatz zu gewährleisten, wird die Funktion des Systems in der Regel überwacht.

### Stand der Technik

Aus der DE 196 44 164 A1 ist ein Kraftfahrzeugradarsystem bekannt, bei dem sich zum Schutz vor Witterungseinflüssen und vorzugsweise auch zur Fokussierung ein dielektrischer Körper im Strahlengang der elektromagnetischen Wellen befindet. Um Schmutz und Belege aus Eis, Schnee oder Feuchtigkeit, die sich auf diesem dielektrischen Körper ablagern, zu detektieren und gegebenenfalls zu beseitigen, besitzt der dielektrische Körper eine Anordnung aus elektrisch leitfähigen Bahnen. Mit ihnen kann der dielektrische Körper beheizt werden, es kann die Dämpfung eines möglichen Belages gemessen werden und es kann eine Zielsimulation zur Funktionsüberprüfung des Radarsystems durchgeführt werden. Zur Messung eines Belages aus Eis, Schnee oder Feuchtigkeit ist bei diesem Kraftfahrzeugradarsystem der dielektrische Körper von zwei kammerförmigen Anordnungen, die eng ineinander verzahnt sind, sich dabei jedoch nicht berühren, überdeckt. Jede der kammerförmigen Anordnungen ist für sich eine elektrisch zusammenhängende Struktur. Zwischen diesen beiden verzahnten Anordnungen kann ein Widerstand R und eine Kapazität C gemessen werden. Diese hängen vom Verlustwinkel tan δ des Materials zwischen den beiden Anordnungen und damit auch von dem Verlustwinkel tan δ eines gegebenenfalls vorhandenen Belags ab. Auf diese Weise kann die Signaldämpfung eines Belages und damit der Grad einer Verschmutzung bestimmt werden. Zur Durchführung dieser Belagsmessung muß die elektrisch leitfähige Anordnung auf der Außenseite des dielektrischen Körpers aufgebracht sein.

Aus der US-5 839 096 ist ein vorausschauendes Kollisionssensorsystem bekannt, das eine Sende- und Empfangseinrichtung umfasst, die modulierte Trägersignale aussendet und an Objekten reflektierte Teilwellen empfängt und aus den Empfangssignalen eine Vielzahl dopplerverschobener harmonischer Komponenten detektiert. Eine Entfernungsbestimmungseinrichtung bestimmt aus der Amplitude mindestens zweier harmonischer Komponenten den momentanen Abstand des Objektes. Eine Geschwindigkeitsmesseinrichtung bestimmt aus der Frequenz aus mindestens einer der harmonischen Komponenten die momentane Relativgeschwindigkeit des Objektes. Eine Anzeigeeinrichtung bestimmt aus dem modulierten Trägersignal oder dem Empfangssignal oder der Amplitude und der Frequenz des Empfangssignals den Zustand des Systems.

### Aufgabe, Lösung und Vorteile der Erfindung

Aufgabe der vorliegenden Erfindung ist es, ein Verfahren und eine Vorrichtung zur Zustandserkennung bei einem System zur automatischen Längs- und/oder Querregelung bei einem Kraftfahrzeug anzugeben, das eine Verschmutzung und/oder Blindheit eines Sensors zuverlässig, schnell, kostengünstig und möglichst ohne zusätzliche Hardwarekomponenten bestimmt.

Erfindungsgemäß wird die Aufgabe dadurch gelöst, daß bei einem Verfahren zur Zustandserkennung bei einem System zur automatischen Längs- und/oder Querregelung bei einem Kraftfahrzeug, arbeitend nach dem Radarprinzip und/oder dem Lidarprinzip, insbesondere zur Verschmutzuhgs- und/oder Blindheitserkennung eines Sensors, die Zustandserkennung von wenigstens zwei Indikatoren (In) abhängig ist, die aus den von dem Sensor empfangenen und/oder ausgesendeten Signalen gebildet werden, die wenigstens zwei Indikatoren (Iₙ) mit Wichtungsfaktoren (an) gewichtet werden und die gewichteten Indikatoren zu einer einzigen Wahrscheinlichkeit (V) verknüpft werden, die eine Aussage über den wahrscheinlichen Zustand (P) des Systems macht.

Diese Lösung bietet den Vorteil, daß zur Verschmutzungsund/oder Blindheitserkennung eines Sensors keine zusätzlichen Hardwarekomponenten, insbesondere keine zusätzlichen elektrisch leitfähigen Bahnen auf der Außenseite des Sensors, notwendig sind. Dies ist eine kostengünstige Umsetzung des erfindungsgemäßen Verfahrens. Vielmehr wird die Lösung der Aufgabe durch wenigstens zwei Indikatoren (In) herbeigeführt, die unmittelbar aus den von dem Sensor empfangenen und/oder ausgesendeten Signalen gebildet werden. Dadurch, daß die gebildeten Indikatoren (In) mit Wichtungsfaktoren (aₙ) gewichtet werden, kann die unterschiedliche Bedeutung der verschiedenen Indikatoren (In) für die Zustandserkennung bei dem System berücksichtigt werden. Dadurch, daß die gewichteten Indikatoren zu einer einzigen Wahrscheinlichkeit (V) verknüpft werden, die eine Aussage über den wahrscheinlichen Zustand (P) des Systems macht, wird eine schnelle und zuverlässige Bestimmung des wahrscheinlichen Zustands (P) möglich. Dadurch, daß die Lösung lediglich die Bestimmung einer einzigen Wahrscheinlichkeit (V) vorsieht, ist eine besonders schnelle Bestimmung des wahrscheinlichen Zustands (P) möglich.

Vorteilhafterweise nimmt die Wahrscheinlichkeit (V) Werte zwischen 0 und 1 an.

Besonders vorteilhaft ist es, daß die Wichtungsfaktoren (aₙ) von zwei unterschiedlichen Fahrsituationen (F₁, F₂) abhängig sind. Dies bietet den Vorteil, daß das erfindungsgemäße. Verfahren an verschiedene Fahrsituationen (F₁, F₂) angepaßt werden kann. Vorteilhaft ist es hierbei, wenn die folgenden beiden Fahrsituationen (F₁, F₂) berücksichtigt werden:
1. Das System detektiert ein anderes Kraftfahrzeug, das als Zielobjekt für eine Regelung verwendet wird.
2. Das System detektiert kein anderes Kraftfahrzeug, das als Zielobjekt für eine Regelung verwendet wird.

Durch die Berücksichtigung der beiden unterschiedlichen Fahrsituationen (F₁, F₂) kann eine Klassifizierung der Fahrsituationen (F₁, F₂) vorgenommen werden, wie sie typischerweise von einem System der gattungsgemäßen Art unterschieden werden kann.

Ein besonderer Vorteil des erfindungsgemäßen Verfahrens ist, daß die weitere Auswertung der Wahrscheinlichkeit (V) anhand eines Schwellwertverfahrens vorgenommen wird. Hierbei ist es möglich, daß das Schwellwertverfahren für jede der beiden Fahrsituationen (F₁, F₂) je zwei Schwellwerte (S1_{1/2}, S2_{1/2}) vorsieht oder, daß das Schwellwertverfahren für jede der beiden Fahrsituationen (F₁, F₂) je einen Schwellwert (S3_{1/2}) vorsieht. Im Fall von zwei Schwellwerten (S1_{1/2}, S2_{1/2}) können in Abhängigkeit von der Wahrscheinlichkeit (V) drei Zustände (P) des Systems unterschieden werden:
1. Das System liefert optimale Performance.
2. Die Performance des Systems ist nicht optimal.
3. Es ist keine Funktion des Systems möglich.

Im Falle der Verwendung eines Schwellwertes (S3_{1/2}) werden in Abhängigkeit von der Wahrscheinlichkeit (V) zwei Zustände (P) des Systems unterschieden:
1. Das System liefert optimale Performance.
2. Es ist keine Funktion des Systems möglich.

Die Möglichkeit, entweder einen Schwellwert (S3_{1/2}) oder zwei Schwellwerte (S1_{1/2}, S2_{1/2}) zu verwenden, bietet den Vorteil, daß das System an die gewünschte Quantifizierung des Zustands (P) des Systems angepaßt werden kann. Allgemein liegt es im Rahmen des erfindungsgemäßen Verfahrens eine beliebige Anzahl von Schwellwerten zur Auswertung zu verwenden.

Besonders vorteilhaft ist es, daß ein möglicher Zustand (P) erst dann als bestimmt angenommen wird, wenn das Ergebnis für eine vorbestimmte Zeitdauer (T) vorliegt. Dies bietet den Vorteil, daß insbesondere in den Fällen, in denen der mögliche Zustand auf eine schlechte und/oder keine Performance des Systems hinweist, kurzzeitige Störungen oder Änderungen im Systemzustand keinen Einfluß auf das Ergebnis des wahrscheinlichen Zustands (P) haben.

Vorteilhaft ist es weiterhin, daß das Erreichen der vorbestimmten Zeitdauer (T) durch eine der beiden folgenden Möglichkeiten erfolgt:
1. Dadurch, daß eine Zeitmessung auf 0 gesetzt wird, wenn in einem Meßzyklus die zuvor bestimmte Schwellwertunterschreitung nicht mehr vorliegt. Somit ist sichergestellt, daß die Zeitmessung immer dann wieder von vorne beginnt, wenn eine Schwellwertunterschreitung vorgelegen hat.
2. Dadurch, daß ein Zeitzähler inkrementiert wird, wenn die Schwellwertunterschreitung in einem Meßzyklus vorliegt, und dekrementiert wird, wenn die Schwellwertunterschreitung in einem Meßzyklus nicht vorliegt, wobei der Zeitzähler den Wert 0 nicht unterschreitet.

Der Vorteil beider Lösungen ist darin zu sehen, daß selbst eine kurzfristige Schwellwertunterschreitung in einem Meßzyklus wenigstens für diesen Meßzyklus die Bestimmung eines Zustands verhindert, der auf eine schlechte und/oder keine Performance des Systems hinweist.

Vorteilhaft ist weiterhin, daß im Falle der Zustände die auf eine schlechte und/oder keine Performance des Systems hinweisen, ein Signal in den Innenraum des Kraftfahrzeugs übertragen wird, das den Fahrer des Kraftfahrzeugs darauf aufmerksam macht, daß das System keine optimale Performance liefert und/oder daß keine Funktion des Systems möglich ist. Vorteilhafterweise ist das Signal eine optische Anzeige und/oder ein akustisches Signal. Diese Art der Signalisierung stellt sicher, daß der Fahrer des Kraftfahrzeugs zuverlässig auf den Zustand des Systems aufmerksam gemacht wird. Vorteilhaft ist außerdem, daß die optische Anzeige eine Serviceanzeige ist. Eine solche Serviceanzeige ist in der Regel in modernen Kraftfahrzeugen vorhanden und erfordert somit keinen zusätzlichen Hardwareaufwand.

Besonders vorteilhaft ist es zudem, das System zur automatischen Längs- und/oder Querregelung bei einem Kraftfahrzeug in Abhängigkeit von dem wahrscheinlichen Zustand des Systems zu deaktivieren.

### Beschreibung von Ausführungsbeispielen

Nachfolgend werden Ausführungsbeispiele der Erfindung anhand von Zeichnungen erläutert. Es zeigen
- Figur 1: ein Kraftfahrzeugradarsystem, in das das erfindungsgemäße Verfahren integriert ist,
- Figur 2: eine schematische Darstellung zum Ablauf eines ersten Ausführungsbeispiels des erfindungsgemäßen Verfahrens,
- Figur 3: eine schematische Darstellung zum Ablauf eines zweiten Ausführungsbeispiels des erfindungsgemäßen Verfahrens,
- Figur 4: eine schematische Darstellung zum Ablauf eines dritten Ausführungsbeispiels des erfindungsgemäßen Verfahrens und
- Figur 5: eine schematische Darstellung eines Ausführungsbeispiels, um dem Fahrer des Kraftfahrzeugs den bestimmten Zustand des Systems zu signalisieren.

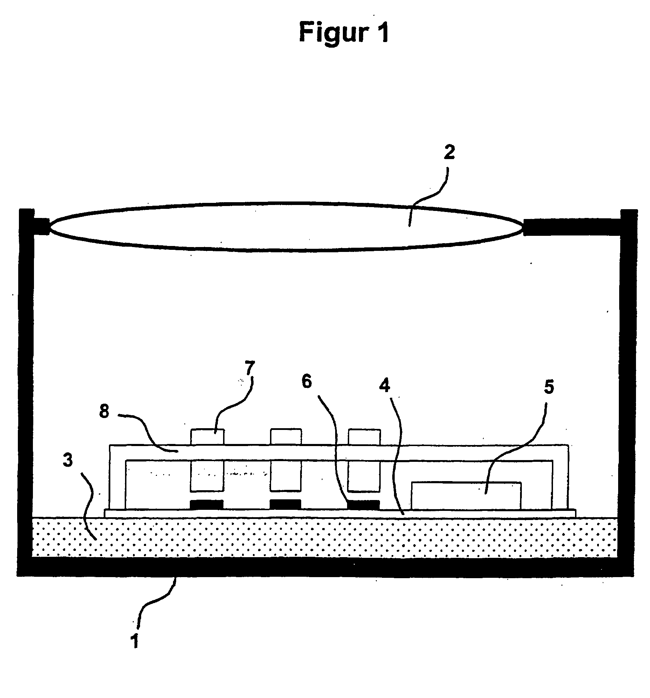

Figur 1 zeigt ein Kraftfahrzeugradarsystem mit einem Gehäuse 1 und einem fokussierenden Mittel 2, das beispielsweise eine dielektrische Linse in jeglicher Ausführungsform sein kein. In dem Gehäuse 1 befindet sich eine Grundplatte 3, auf der sich wiederum eine Leiterplatte 4 befindet. Auf der Leiterplatte 4 sind unter anderem elektronische Bauteile 5 aufgebracht, die unter anderem die erfindungsgemäße Vorrichtung zur Zustandserkennung bei einem System zur automatischen Längs- und/oder Querregelung bei einem Kraftfahrzeug beinhalten. Auf der Leiterplatte 4 sind weiterhin Strahlerelemente 6 aufgebracht, die beispielsweise als Patchantennenelemente ausgeführt sein können. Über diese Strahlerelemente 6 wird die hochfrequente Mikrowellenstrahlung ausgesendet und/oder empfangen. Die Strahlung wird dabei durch vorfokussierende Mittel 7 vorfokussiert, bevor sie durch das fokussierende Mittel 2 endgültig fokussiert wird. In Empfangsrichtung ist die Reihenfolge entsprechend umgekehrt. Die vorfokussierenden Mittel 7 werden von einer Abdeckung 8 in ihre Position oberhalb der Strahlerelemente 6 gehalten.

Es liegt weiterhin im Rahmen des erfindungsgemäßen Verfahrens, daß dieses bei einem Radarsystem jeglicher Art, entweder basierend auf elektromagnetischer Mikrowellenstrahlung und/oder basierend auf dem Lidarprinzip, angewendet wird.

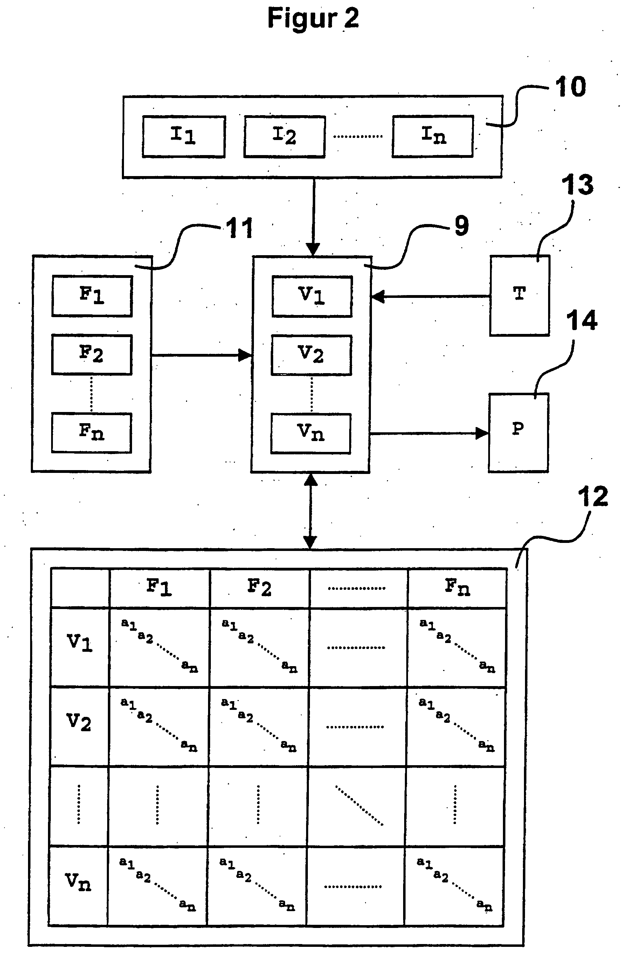

Figur 2 zeigt eine schematische Darstellung zum Ablauf eines ersten Ausführungsbeispiels des erfindungsgemäßen Verfahrens. In einer Zustandsbestimmungseinheit 9 werden im allgemeinen Fall n Wahrscheinlichkeiten (Vₙ) bestimmt.

Die zu bestimmenden Wahrscheinlichkeiten (Vₙ) dienen dazu, den wahrscheinlichen Zustand (P) des Systems zu bestimmen. Als zu bestimmende Wahrscheinlichkeiten (Vₙ), von denen dann beispielsweise die größte als möglicher Zustand (P) des Systems bestimmt wird, können im Rahmen dieses Ausführungsbeispiels beispielsweise die folgenden verwendet werden:
1. Das System liefert optimale Performance (V₁). Dies kann beispielsweise bedeuten, daß der Sensor des System frei von jeglicher Verschmutzung ist.
2. Die Performance des Systems ist nicht optimal (V₂). Dies kann beispielsweise bedeuten, daß der Sensor des Systems verschmutzt ist.
3. Es ist keine Funktion des Systems möglich (V₃). Dies kann beispielsweise bedeuten, daß der Sensor des Systems blind ist.

Diese Festlegung der zu bestimmten Wahrscheinlichkeiten (Vₙ) entspricht dem hier vorgestellten Ausführungsbeispiel. Es ist selbstverständlich möglich, die Anzahl der zu bestimmenden Wahrscheinlichkeiten (Vₙ) weiter einzugrenzen oder zu erweitern. Dies hängt in erster Linie davon ab, wozu das bestimmte Zustandssignal (P) im weiteren verwendet werden soll, ob es dabei eher auf eine qualitative Aussage (Funktion/keine Funktion) oder auf-eine quantitative Aussage (exakter Zustandswert) ankommt.

Zur Bestimmung der Wahrscheinlichkeiten (Vₙ) werden der Zustandsbestimmungseinheit 9 Indikatoren (Iₙ) 10 zur Verfügung gestellt, auf die im weiteren noch detaillierter eingegangen wird. Die Anzahl der Indikatoren (In) ist in diesem Ausführungsbeispiel allgemein mit n angenommen. Der Zustandsbestimmungseinheit 9 wird weiterhin die aktuelle Fahrsituation/Fahrzustand (Fₙ) 11 übermittelt. In diesem Ausführungsbeispiel sind allgemein n verschiedene Fahrsituationen (Fₙ) angedeutet. Auf die möglichen Fahrsituationen (Fₙ) wird ebenfalls im folgenden noch detaillierter eingegangen. Je nach dem welche Wahrscheinlichkeit (Vₙ) in der Zustandsbestimmungseinheit 9 aktuell bestimmt werden soll und je nach derzeitiger Fahrsituation (Fₙ) 11 werden die entsprechenden Wichtungsfaktoren (a₁ bis aₙ) aus einer Wichtungsfaktorentabelle 12 ausgewählt. Diese Wichtungsfaktorentabelle 12 enthält für jede mögliche Kombination aus zu bestimmender Wahrscheinlichkeit (Vₙ) und möglicher Fahrsituation (Fₙ) die jeweils zugehörigen entsprechend angepaßten Wichtungsfaktoren (a₁ bis aₙ). Die entsprechend ausgewählten Wichtungsfaktoren (a₁ bis an) werden in der Zustandsbestimmungseinheit 9 mit den entsprechenden Indikatoren (In) multipliziert. Die auf diese Weise gewichteten Indikatoren werden in der Zustandsbestimmungseinheit 9 aufsummiert und ergeben die zu bestimmende Wahrscheinlichkeit (Vₙ). Allgemein ist zur Verknüpfung der Indikatoren (In) und der Wichtungsfaktoren (a₁ bis aₙ) jede beliebige Verknüpfungsform möglich, die zu einem aussagekräftigen Ergebnis führt. Dieser Vorgang wird für jede zu bestimmende Wahrscheinlichkeit (Vₙ) wiederholt. Dadurch, daß sowohl die Indikatoren als auch die Wichtungsfaktoren (aₙ) auf einen Wertebereich zwischen 0 und 1 normiert sind, ergeben sich in der Summe Wahrscheinlichkeiten (Vₙ), die ebenfalls im Wertebereich zwischen 0 und 1 liegen. Im Fall der Indikatoren (In) bedeutet dabei eine 0 eine vollständige Verschmutzung/Blindheit und eine 1 keine Verschmutzung des Sensors. Im Fall der zu bestimmenden Wahrscheinlichkeiten (Vₙ) bedeutet eine 1, daß der Sensor zu 100% frei ist, und eine 0, daß der Sensor zu 0% frei ist. Nachdem von der Zustandsbestimmungseinheit 9 alle zu bestimmenden Wahrscheinlichkeiten (Vₙ) bestimmt worden sind, wird diejenige Wahrscheinlichkeit (Vₙ) ausgewählt, die am größten ist. Insbesondere dann, wenn die auf diese Weise bestimmte Wahrscheinlichkeit (Vₙ) einen schlechten Zustand (P) des Systems signalisiert, wird unter Verwendung eines Zeitgliedes 13 zunächst überprüft, ob die bestimmte Wahrscheinlichkeit wenigstens für einen Zeitraum (T), entsprechend des Zeitgliedes 13, die größte der zu bestimmenden Wahrscheinlichkeiten (Vₙ) ist. Ist dies der Fall, daß also eine der zu bestimmenden Wahrscheinlichkeiten (Vₙ) für wenigstens einen Zeitraum (T) die größte der zu bestimmenden Wahrscheinlichkeiten (Vₙ) war, so wird diese Wahrscheinlichkeit (Vₙ) als wahrscheinlicher Zustand (P) des Systems ausgewählt und als Zustand (P) des Sensors 14 zur weiteren Verarbeitung zur Verfügung gestellt.

Der Vorteil bei der Verwendung von Wichtungsfaktoren (aₙ) liegt in ganz besonderer Weise darin, daß eine Anpassung an nahezu jede mögliche Fahrsituation (Fₙ) und/oder zu bestimmender Wahrscheinlichkeit (Vₙ) vorgenommen werden kann. Dabei ist die Anzahl der in der Tabelle abzulegenden Wichtungsfaktoren von der Anzahl der unterschiedenen Fahrsituationen, der Anzahl der unterschiedlichen zu bestimmenden Wahrscheinlichkeiten und der Anzahl der verwendeten Indikatoren abhängig. Im einfachsten Fall mit 2 Fahrsituationen, eine zu bestimmende Wahrscheinlichkeit und 2 Indikatoren sind somit insgesamt 2 x 1 x 2 = 4 Wichtungsfaktoren notwendig. Bei einer komplexeren Ausführung mit beispielsweise 3 Fahrsituationen, 3 zu bestimmenden Wahrscheinlichkeiten und 6 Indikatoren sind dann insgesamt 3 x 3 x 6 = 54 Wichtungsfaktoren notwendig. Die Auswahl der zum Einsatz kommenden Kombination hängt von vielen Faktoren wie beispielsweise dem verwendeten Sensorsystem oder die geforderten Genauigkeit und Vielseitigkeit ab, und ist dem Ermessen des Fachmanns überlassen.

Die zuvor bereits genannten Fahrsituationen (Fₙ) sollten jeweils adaptiv an das zur Verfügung stehende Sensorsystem angepaßt werden. Je nachdem wie empfindlich der Sensor ist beziehungsweise wie viele und welche Fahrsituationen (Fₙ) mit dem Sensor unterschieden werden können, sollte die Festlegung der zu berücksichtigenden Fahrsituationen erfolgen. Die wichtigste in jedem Fall zu berücksichtigende Fahrsituation ist, daß das System ein anderes Fahrzeug detektiert, das als Regelobjekt für eine Längs- und/oder Querregelung ausgewählt wird. Diese Fahrsituation (Fₙ) zu berücksichtigen ist deswegen derart relevant, weil ein System zur automatischen Längs- und/oder Querregelung bei einem Kraftfahrzeug in dem Modus, in dem es ein Zielobjekt für die Regelung ausgewählt hat, in der Regel die zuverlässigsten und genauesten Daten liefert. Als weitere zu berücksichtigende Fahrsituation (Fₙ) bietet sich die Fahrsituation (Fₙ) an, in der das System kein mögliches Objekt für eine Regelung detektiert, wohl aber andere bewegte Öbjekte/Zielobjekte. Dies können beispielsweise entgegenkommende Fahrzeuge, bewegte Objekte am Fahrbahnrand oder vorausfahrende Fahrzeuge/Zielobjekte, die nicht als Regelobjekt ausgewählt sind (weil sie beispielsweise in einer anderen Fahrspur fahren), sein. Möglich ist weiterhin die Fahrsituation (Fₙ), daß das System weder ein mögliches Zielobjekt für eine Regelung noch andere bewegte Objekte/Zielobjekte detektiert. Im Rahmen der vorliegenden Erfindung sind all diejenigen Fahrsituationen (Fₙ) denkbar, die von dem System unterschieden werden können.

Einer der wichtigsten Punkte für die Zuverlässigkeit des erfindungsgemäßen Verfahrens ist die Auswahl der verwendeten Indikatoren (Iₙ), die zusammen mit den Wichtungsfaktoren (aₙ) die Berechnungsgrundlage des Verfahrens darstellen. Im Rahmen dieses Ausführungsbeispiels werden nun im folgenden sechs mögliche Indikatoren (In) vorgestellt. Denkbar wären jedoch auch weitere Indikatoren (Iₙ), die aus den von dem Sensor empfangenen und/oder ausgesendeten Signalen gebildet werden können. Wichtigstes Kriterium eines solchen Indikators (In) ist, daß er sich wenigstens in Abhängigkeit vom Zustand (P) des Sensors verändert.

Ein erster möglicher Indikator (Iₙ) ist die mittlere Winkelgüte aller von dem System detektierten Objekte. Die Winkelgüte kann beispielsweise aus dem Quotienten von realem Objektwinkel und der Differenz aus realem und gemessenem Objektwinkel bestimmt werden. Um einen aussagekräftigen Indikator (Iₙ) zu erhalten, der eine Aussage über die Qualität der bestimmten Objektwinkel macht, wird die Winkelgüte aller detektierten Objekte gemittelt. Um diesen Indikator (Iₙ) mit den weiteren noch folgenden Indikatoren (In) untereinander vergleichbar beziehungsweise verknüpfbar zu machen, wird der Indikator (Iₙ) auf einen Wertebereich zwischen 0 und 1 normiert. Bei einem auf elektromagnetischer Mikrowellenstrahlung basierenden Radarsystem empfiehlt es sich, die Winkelgüten nur in einem Bereich zu betrachten, in dem generell hohe Güten erwartet werden. Dies ist beispielsweise bei einem Radarsystem zur automatischen Fahrgeschwindigkeits- und Abstandsregelung ein Winkelbereich von ca. ± 3°. Bricht dann in diesem Winkelbereich die mittlere Winkelgüte ein, so kann mit hoher Wahrscheinlichkeit von einer Verschmutzung und/oder Blindheit des Sensorsystems ausgegangen werden. Detektiert das Sensorsystem keine Objekte, zum Beispiel wegen totaler Erblindung oder absoluter Freifahrt, so verliert dieser Indikator (Iₙ) an Bedeutung. Die unterschiedliche Bedeutung eines Indikators (In) wird in dem erfindungsgemäßen Verfahren durch an die entsprechende Fahrsituation (Fₙ) angepaßte Wichtungsfaktoren (aₙ) erreicht. Auf diese Weise werden bei dem erfindungsgemäßen Verfahren in jeder Fahrsituation (Fₙ) gerade die Indikatoren (Iₙ) stärker gewichtet, die speziell in der Fahrsituation (Fₙ) eine hohe Aussagekraft haben. Bei dem hier vorliegenden Indikator (In) der mittleren Winkelgüte aller von dem System detektierten Objekte ist dies beispielsweise die Fahrsituation (Fₙ), in der das System ein vorausfahrendes Fahrzeug/Zielobjekt als Objekt für eine Regelung ausgewählt hat (geregelte Folgefahrt).

Ein weiterer möglicher Indikator (In) ist die Objektstabilität, die die Rate von Detektionsausfällen des für die Fahrzeuglängsregelung ausgewählten Zielbeziehungsweise Regelobjekts beschreibt. Wenn beispielsweise ein System zur automatischen Geschwindigkeits- und Abstandsregelung in einem Kraftfahrzeug ein vorausfahrendes Kraftfahrzeug als Regelobjekt ausgewählt hat, so wird ein sogenanntes Tracking durchgeführt. Bei diesem Tracking werden in jedem Zeitabschnitt die vom Sensorsystem ermittelten Daten mit denen verglichen, die in den Zeitschritten zuvor detektiert worden sind. Auf diese Art und Weise kann im Speicher des Systems für jedes der detektierten Objekte eine Art virtueller Track abgelegt werden. Hierbei kommt es in der Regel vor, daß selbst das ausgewählte Regelobjekt nicht in jedem Zeitschritt detektiert wird. Hierdurch entstehen Detektionslücken in dem virtuellen Track. Die Objektstabilität kann nun aus dem Quotienten der Anzahl der Zeitschritte, in denen ein Objekt detektiert wurde, und der gesamten Anzahl der Zeitschritte, in denen das Objekt beobachtet wurde, bestimmt werden. Auch dieser Indikator (In) wird auf einen Wertebereich zwischen 0 und 1 normiert, um ihn mit den weiteren Indikatoren vergleichbar zu machen. Wird dieser Indikator (Iₙ) gefiltert, normiert und über eine längere Zeit betrachtet, so ist er insbesondere dann wenn ein vorausfahrendes Regelobjekt vorhanden ist, bzw. ein Zielobjekt für die Regelung ausgewählt worden ist, sehr empfindlich gegenüber einem veränderten Systemzustand, da im allgemeinen in dieser Fahrsituation (Fₙ) eine sehr hohe Objektstabilität erwartet wird. Gerade diese Situation, in der das eigene Kraftfahrzeug hinter einem vorausfahrenden Regelobjekt fährt, ist eine der Situationen, in denen sich der Zustand (P) des Systems häufig stark verschlechtert. Dies kann beispielsweise dadurch geschehen, daß von dem vorausfahrenden Regelobjekt Schmutz, Schnee oder Schneematsch aufgewirbelt wird und den Sensor des eigenen Systems zur automatischen Fahrgeschwindigkeits- und/oder Abstandsregelung verschmutzt. Aus diesem Grund wird der Indikator Objektstabilität insbesondere in der Fahrsituation (Fₙ) in der ein Zielobjekt für eine Regelung verwendet wird, sehr hoch gewichtet.

Ein weiterer möglicher Indikator (In) ist die mittlere Leistung der von dem Sensor empfangenen Signale. Wird von einem Sensor viel Leistung empfangen, so kann diese beispielsweise von einzelnen starken oder auch von vielen schwachen Zielen herrühren. Sind hingegen keine Ziele vorhanden oder ist der Sensor verschmutzt und/oder erblindet, so wird entsprechend wenig Leistung vom Sensor empfangen. Zur Berechnung des Indikators (In) werden die Leistungen aller detektierten Peaks im Spektrum der empfangenen Signale aufaddiert und ein Mittelwert gebildet. Im Anschluß empfiehlt es sich auch diesen Indikator (Iₙ) auf einen Wert zwischen 0 und 1 zu normieren, um einen Vergleich mit den anderen Indikatoren (In) zu ermöglichen. Dieser Indikator (In) ist insbesondere dann von großer Bedeutung, wenn die totale Erblindung des Sensors festgestellt werden soll und in Fahrsituationen (Fₙ), in denen kein Zielobjekt für eine Regelung ausgewählt worden ist, jedoch noch andere Zielobjekte detektiert werden. Somit wird dieser Indikator (Iₙ) bei der Bestimmung der entsprechenden Wahrscheinlichkeiten (Vₙ) entsprechend hoch gewichtet (aₙ).

Ein weiterer möglicher Indikator (In) ist die Summe alle von dem System während einer Messung detektierten Objekte. Auch bei diesem Indikator (Iₙ) empfiehlt sich eine Normierung in einem Wertebereich zwischen 0 und 1. Dieser Indikator (In) hat insbesondere bei der Bewertung der totalen Blindheit des Sensors und in Fahrsituationen (Fₙ), in denen kein Zielobjekt für eine Regelung ausgewählt worden ist, jedoch noch andere Zielobjekte detektiert werden, hohe Bedeutung. Somit wird dieser Indikator (Iₙ) bei der Bestimmung der entsprechenden Wahrscheinlichkeiten (Vₙ) entsprechend hoch gewichtet (aₙ).

Ein weiterer möglicher Indikator (In) ist die Verknüpfung von Abstand und Amplitude des am weitesten entfernt detektierten Objekts. Hierbei bestimmt das System zunächst den Abstand und die Amplitude des am weitesten entfernt detektierten Zielobjekts. Im Anschluß werden diese beiden Werte multipliziert, um eine von der Objektgeometrie unabhängige Größe zu erhalten. Nach entsprechender Normierung, vorzugsweise in einen Wertebereich zwischen 0 und 1, gibt dieser Indikator (Iₙ) insbesondere Auskunft über die maximale Reichweite des Sensor und die Signalstärke der detektierten Ziele. Unterschreitet dieser Indikator (Iₙ) über eine längere Zeit einen bestimmten Grenzwert, so kann auf Blindheit des Sensors geschlossen werden. Falls kein Zielobjekt detektiert wird, wird dieser Indikator (In) zu 0 gesetzt. Dieser Indikator (Iₙ) wird insbesondere dann hoch gewichtet (aₙ), wenn kein unmittelbares Regelobjekt, jedoch andere Zielobjekte detektiert werden.

Ein weiterer möglicher Indikator (In) sind die vom System detektierten Straßenreflektionen. Hierbei ist es dem Sensor möglich über seinen vertikalen Detektionsbereich Straßenreflektionen zu erkennen. Dieser Indikator (In) kann insbesondere dann zur Bewertung herangezogen werden, wenn keinerlei Ziel- und/oder Regelobjekte vorhanden sind. In diesen Fahrsituationen (Fₙ) wird dieser Indikator (In) entsprechend stark gewichtet (aₙ). Da die vom System detektierten Straßenreflektionen in der Regel nur sehr schwach detektiert werden, kann damit eine Verschmutzung und/oder Erblindung des Sensors sehr früh erkannt werden. Diese kann dadurch festgestellt werden, daß im Falle einer Verschmutzung und/oder Erblindung die schwachen Signale der vom System detektierten Straßenreflektionen nicht mehr im Spektrum aller detektierten Signale auftauchen. Auch bei diesem Indikator (In) bietet sich eine Normierung in einen Wertebereich zwischen 0 und 1 an, um ihn mit anderen Indikatoren (Iₙ) vergleichbar zu machen.

Im allgemeinen sind alle Indikatoren (Iₙ) mehr oder weniger von der Umgebungsstruktur abhängig. Diese Tatsache muß bei der Auswertung der entsprechenden Signale in jedem Fall berücksichtigt werden. Um beispielsweise diesen Einfluß aber auch um andere Einflüsse zu berücksichtigen, liegt es im Rahmen der Erfindung, daß zur Bestimmung der Indikatoren (Iₙ) die Signale gefiltert und/oder einer sonstigen Signalverarbeitung unterzogen werden. Die Normierung der Indikatoren (Iₙ) erfolgt vorzugsweise in einen Wertebereich zwischen 0 und 1, kann jedoch auch auf andere Weise vorgenommen werden.

Im allgemeinen kann das vorgestellte Verfahren an verschiedene Fahrzeuge und/oder Sensorsysteme und/oder Umgebungsstrukturen adaptiv angepaßt werden. Hierzu kann die Anzahl der verwendeten Indikatoren (Iₙ) erhöht oder verringert werden, die Art/Auswahl der Indikatoren (In) variiert werden, es können die zu unterscheidenden Fahrzustände (Fₙ) verändert werden, es können entsprechend andere Wahrscheinlichkeiten (Vₙ) bestimmt werden, es können entsprechend der verschiedenen bestimmten Wahrscheinlichkeiten (Vₙ) entsprechend verschiedene Zustände (P) für das System bestimmt werden und es können beispielsweise die Wichtungsfaktoren (aₙ) adaptiv an die verschiedenen Fahrzustände (Fₙ) und die zu bestimmenden Wahrscheinlichkeiten (Vₙ) angepaßt werden. Hierbei wird es dem Wissen des Fachmanns überlassen, das Verfahren in geeigneter Art und Weise anzupassen.

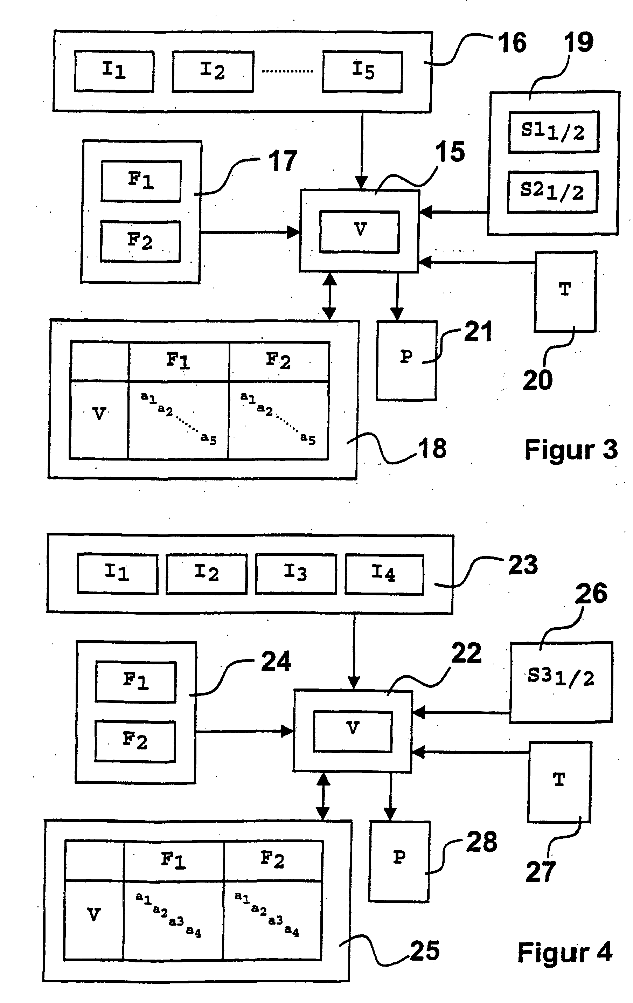

Figur 3 zeigt eine schematische Darstellung zum Ablauf eines zweiten Ausführungsbeispiels des erfindungsgemäßen Verfahrens. Hierbei wird in einer Zustandsbestimmungseinheit 15 eine einzige Wahrscheinlichkeit (V) bestimmt. Zur Bestimmung der Wahrscheinlichkeit (V) werden hierbei fünf Indikatoren (I₁...I₅) 16, sowie zwei verschiedene Fahrsituationen (F₁, F₂) 17 zur Auswertung herangezogen. Als Indikatoren (I₁...I₅) werden dabei die Indikatoren (I₁...I₅) verwendet, die im Rahmen des ersten Ausführungsbeispiels (Figur 2) beschrieben worden sind, mit Ausnahme des Indikators, der eine Aussage über die vom System detektierten Straßenreflektionen macht. Als Fahrsituationen (F₁, F₂) 17 wird dabei nur noch zwischen der Fahrsituation unterschieden, in der das System ein anderes Kraftfahrzeug detektiert, das als Zielobjekt für eine Regelung verwendet wird, und der Fahrsituation, daß das System kein solches Kraftfahrzeug detektiert. Je nach dem welche Fahrsituation (F₁, F₂) 17 vorherrscht, werden aus der Wichtungsfaktorentabelle 18 die der Fahrsituation 17 entsprechenden Wichtungsfaktoren (a₁...a₅) an die Zustandsbestimmungseinheit 15 übertragen. Die Zustandsbestimmungseinheit 15 kann nunmehr die Indikatoren I₁ bis I₅ mit den zugehörigen Wichtungsfaktoren a₁ bis a₅ wichten und zur Wahrscheinlichkeit (V) verknüpfen. Um aus dieser einzigen bestimmten Wahrscheinlichkeit (V) auf einen wahrscheinlichen Zustand (P) des Systems schließen zu können, werden aus einer Schwellwerttabelle 19 die Schwellwerte S1_{1/2} und S2_{1/2} in die Zustandsbestimmungseinheit 15 übertragen. Für den Fall, daß die bestimmte Wahrscheinlichkeit (V) größer oder gleich ist dem Schwellwert S1_{1/2}, wird davon ausgegangen, daß das System eine optimale Performance liefert. Für den Fall, daß die bestimmte Wahrscheinlichkeit (V) kleiner ist als der Schwellwert S1_{1/2}, jedoch größer oder gleich ist dem Schwellwert S2_{1/2}, so wird davon ausgegangen, daß die Performance des Systems nicht optimal ist. Für den Fall, daß die Wahrscheinlichkeit (V) kleiner als der Schwellwert S2_{1/2} ist, wird angenommen, daß das System keine Funktion ermöglicht. Bevor nun der so bestimmte wahrscheinliche Zustand (P) des Systems als Zustand des Sensors 21 übertragen wird, wird in den Fällen die auf eine schlechte und/oder keine Performance des Systems schließen überprüft, ob der bestimmte mögliche Zustand (P) für eine vorbestimmte Zeitdauer (T) 20 vorliegt. Die Überprüfung, ob die vorbestimmt Zeitdauer (T) erreicht worden ist, kann dabei auf zwei unterschiedlichen Wegen erfolgen: Entweder wird eine Zeitmessung auf 0 gesetzt, wenn in einem Meßzyklus die zuvor bestimmte Schwellwertunterschreitung nicht mehr vorliegt oder ein Zeitzähler wird inkrementiert, wenn die Sollwertunterschreitung in einem Meßzyklus vorliegt, und dekrementiert, wenn die Schwellwertunterschreitung in einem Meßzyklus nicht vorliegt, wobei der Zeitzähler den Wert 0 nicht unterschreitet. Durch die Berücksichtigung der vorbestimmten Zeitdauer (T) kann verhindert werden, daß kurzfristige Änderungen und/oder Störungen einen unmittelbaren Einfluß auf den zu bestimmenden Zustand (P) des Systems haben. Erst, wenn eine Schwellwertunterschreitung für die vorbestimmte Zeitdauer (T) bestanden hat, wird der sich hieraus ergebende Zustand als Zustand des Sensors (P) 21 übertragen. Hierbei liegt es im Rahmen des erfindungsgemäßen Verfahrens, daß ein Fachmann weitere Möglichkeiten zur Zeitmessung in das Verfahren einbindet.

Bei einem System zur automatischen Längs- und/oder Querregelung bei einem Kraftfahrzeug ist in der Regel ein internes Signal (Flag) vorhanden, das entweder darauf hindeutet, daß derzeit ein Zielobjekt erfaßt ist, das für eine Regelung verwendet wird, oder daß kein Zielobjekt erfaßt ist, das für eine Regelung verwendet wird. Je nach Architektur der elektrischen/elektronischen Systeme des Kraftfahrzeugs kann dieses Signal (Flag) auf einem KFZinternen Bussystem zur Verfügung gestellt werden. Dieses Signal (Flag) kann beispielsweise zur Unterscheidung der beiden Fahrsituationen (F₁, F₂) 17 verwendet werden.

Das in Figur 3 dargestellte Ausführungsbeispiel bietet gegenüber dem Ausführungsbeispiel nach Figur 2 den Vorteil, daß lediglich die Berechnung/Bestimmung einer einzigen Wahrscheinlichkeit (V) erforderlich ist, um einen wahrscheinlichen Zustand (P) des Systems zu bestimmen. Hierzu sind die Schwellwerte 19 gegenüber dem Ausführungsbeispiel nach Figur 2 zusätzlich in das Verfahren aufgenommen worden.

Figur 4 zeigt eine schematische Darstellung eines dritten Ausführungsbeispiels zum Ablauf des erfindungsgemäßen Verfahrens. Hierbei liegen die Unterschiede zum vorhergehenden Ausführungsbeispiel in erster Linie darin, daß die Anzahl der verwendeten Indikatoren (I₁...I₄) auf vier reduziert wurde und die Bestimmung des möglichen Zustands (P) des Systems auf Basis lediglich eines einzigen Schwellwerts (S3_{1/2}) vorgenommen wird. Hierbei werden der Zustandsbestimmungseinheit 22 wiederum Indikatoren (I₁...I₄) 23 und Fahrzustände (F₁, F₂) 24 übertragen. Bei den Indikatoren (I₁...I₄) wird gegenüber den Ausführungen zum vorgehenden Ausführungsbeispiel auf den Indikator verzichtet, der eine Aussage über das am weitesten entfernt detektierte Ziel macht. Die zu unterscheidenden Fahrzustände/Fahrsituationen 24 entsprechen denen des vorhergehenden Ausführungsbeispiels. Entsprechend der vorherrschenden Fahrsituation (F₁, F₂) 24 wird der Zustandsbestimmungseinheit 22 aus der Wichtungsfaktorentabelle 25 der entsprechende Satz Wichtungsfaktoren (a₁ ... a₄) übertragen. Analog zu den vorhergehenden Ausführungsbeispielen wird auf dieser Basis die Wichtung und Verknüpfung der Indikatoren durchgeführt. Das Ergebnis ist wiederum eine einzige Wahrscheinlichkeit (V), die mit Hilfe eines Schwellwertverfahrens bewertet wird. Dazu wird aus einem Schwellwertspeicher 26 der Schwellwert S3_{1/2} an die Zustandsbestimmungseinheit 22 übertragen. Für den Fall, daß die bestimmte Wahrscheinlichkeit (V) größer oder gleich dem Schwellwert S3_{1/2} ist, wird davon ausgegangen, daß das System optimale Performance liefert. Anderenfalls wird davon ausgegangen, daß keine Funktion des Systems möglich ist. Für den Fall, daß die Wahrscheinlichkeit (V) darauf hindeutet, daß keine Funktion des Systems möglich ist, wird analog zum vorhergehenden Ausführungsbeispiel ein Zeitglied 27 berücksichtigt. Schließlich wird von der Zustandsbestimmungseinheit 22 der Zustand (P) des Sensors 28 als Signal für weitere Anwendungen zur Verfügung gestellt.

Der Vorteil des Ausführungsbeispiels nach Figur 4 gegenüber dem vorhergehenden Ausführungsbeispiel ist in einem weiter reduzierten Rechenaufwand zu sehen, da nur noch vier Indikatoren (I₁...I₄) und ein Schwellwert (S3_{1/2}) zur Bestimmung des Zustand (P) des Systems notwendig sind. Hierbei haben praktische Tests gezeigt, daß insbesondere dann, wenn nur zwischen den Zuständen "Funktion" oder "keine Funktion" unterschieden werden soll, die Kombination von Indikatoren, Fahrzuständen, Wichtungsfaktoren, Schwellwert und Zeitglied nach Figur 4 zu schnellen und hinreichend genauen Ergebnissen führt.

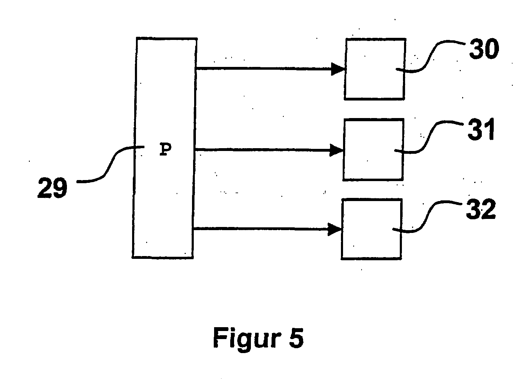

Figur 5 zeigt eine schematische Darstellung eines Ausführungsbeispiels, um dem Fahrer des Kraftfahrzeugs den bestimmten Zustand (P) des Systems zu signalisieren. Um den Fahrer des Kraftfahrzeugs in den Fällen, in denen der bestimmte Zustand (P) 29 auf eine schlechte und/oder keine Performance des Systems hinweist, auf diesen Zustand (P) 29 aufmerksam zu machen, wird ein Signal (30, 31, 32) in den Innenraum des Kraftfahrzeugs übertragen. Das Signal kann eine optische Signalisierung (30) und/oder ein akustisches Signal (31) und/oder eine optische Anzeige (32) sein. Die optische Signalisierung kann beispielsweise ein blinkende Leuchte sind. Als akustisches Signal ist beispielsweise ein Lautsprecher oder Signalgeber denkbar, der im Kraftfahrzeug bereits vorhanden ist, wie beispielsweise der akustische Signalgeber, der den Fahrer eines Kraftfahrzeuges darauf hinweist, daß er beim verlassen des Fahrzeugs vergessen hat das Abblendlicht auszuschalten. Als optische Anzeige (32) bietet sich insbesondere die Serviceanzeige eines Kraftfahrzeugs an, die heutzutage in nahezu jedem Kraftfahrzeug vorhanden ist. Die Serviceanzeige könnte eine Meldung im Klartext, wie beispielsweise "Clean Sensor (CS)", ausgeben, um den Fahrer des Kraftfahrzeugs darauf aufmerksam zu machen, daß eine Reinigung des Sensors erforderlich ist. Die zuvor genannten Signalisierungsarten lassen sich beliebig kombinieren.

Es ist ebenfalls möglich, daß der Zustand des Sensors (P) an eine Vorrichtung übermittelt wird, die gegebenenfalls in der Lage ist, das System zur automatischen Längs- und/oder Querregelung abzuschalten. Hierdurch wird verhindert, daß es beispielsweise im Fall von Meßfehlern zu keinen schwerwiegenden Auswirkungen auf die automatische Längsund/oder Querregelung kommt.

## Patentansprüche

1. Verfahren zur Zustandserkennung bei einem System zur automatischen Längs- und/oder Querregelung bei einem Kraftfahrzeug, arbeitend nach dem Radarprinzip und/oder dem Lidarprinzip, zur Verschmutzungs- und/oder Blindheitserkennung eines Sensors, wobei die Zustandserkennung von wenigstens zwei Indikatoren (Iₙ) abhängig ist, die aus den von dem Sensor empfangenen und/oder ausgesendeten Signalen gebildet werden,
**dadurch gekennzeichnet,**
- **daß** die wenigstens zwei Indikatoren (Iₙ) mit Wichtungsfaktoren (aₙ) gewichtet werden
- **daß** die gewichteten Indikatoren zu einer einzigen Wahrscheinlichkeit (V) verknüpft werden, die eine Aussage über den wahrscheinlichen Zustand (P) des Systems macht,
- **daß** die weitere Auswertung der Wahrscheinlichkeit (V) anhand eines Schwellwertverfahrens vorgenommen wird indem für zwei Fahrsituationen (F₁, F₂) je zwei Schwellwerte (S1_{1/2}, S2_{1/2}) vorgesehen sind.

2. Verfahren zur Zustandserkennung nach Anspruch 1,
**dadurch gekennzeichnet,**
**daß** die Wahrscheinlichkeit (V) Werte zwischen null und eins annimmt.

3. Verfahren zur Zustandserkennung nach Anspruch 1 oder 2,
**dadurch gekennzeichnet,**
**daß** die Wichtungsfaktoren (aₙ) von den folgenden beiden Fahrsituationen (F₁, F₂) abhängig sind:
- Das System detektiert ein anderes Kraftfahrzeug, das als Zielobjekt für eine Regelung verwendet wird;
- Das System detektiert kein anderes Kraftfahrzeug, das als Zielobjekt für eine Regelung verwendet wird.

4. Verfahren zur Zustandserkennung nach Anspruch 1,
**dadurch gekennzeichnet,**
**daß** in Abhängigkeit von der Wahrscheinlichkeit (V) drei Zustände (P) des Systems unterschieden werden:
- 1 ≥ V ≥ S1_{1/2}:
Das System liefert optimale Performance;
- S1_{1/2} > V ≥ S2_{1/2}:
Die Performance des Systems ist nicht optimal;
- S2_{1/2} > V ≥ 0:
Es ist keine Funktion des Systems möglich.

5. Verfahren zur Zustandserkennung nach Anspruch 1,
**dadurch gekennzeichnet,**
**daß** das Schwellwertverfahren für jede der beiden Fahrsituationen (F₁, F₂) je einen Schwellwert (S3_{1/2}) vorsieht.

6. Verfahren zur Zustandserkennung nach Anspruch 5,
**dadurch gekennzeichnet,**
**daß** in Abhängigkeit von der Wahrscheinlichkeit (V) zwei Zustände (P) des Systems unterschieden werden:
- 1 ≥ V ≥ S3_{1/2}:
Das System liefert optimale Performance;
- S3_{1/2} > V ≥ 0:
Es ist keine Funktion des Systems möglich.

7. Verfahren zur Zustandserkennung nach Anspruch 4 oder 6,
**dadurch gekennzeichnet,**
**daß** ein möglicher Zustand (P) erst dann als bestimmt angenommen wird, wenn das Ergebnis für eine vorbestimmte Zeitdauer (T) vorliegt.

8. Verfahren zur Zustandserkennung nach Anspruch 7,
**dadurch gekennzeichnet,**
**daß** das Erreichen der vorbestimmten Zeitdauer (T) entweder dadurch erfolgt,
- **daß** eine Zeitmessung auf null gesetzt wird, wenn in einem Meßzyklus die zuvor bestimmte Schwellwertunterschreitung nicht mehr vorliegt oder
- **daß** ein Zeitzähler inkrementiert wird, wenn die Schwellwertunterschreitung in einem Meßzyklus vorliegt, und dekrementiert wird, wenn die Schwellwertunterschreitung in einem Meßzyklus nicht vorliegt,
wobei der Zeitzähler den Wert null nicht unterschreitet.

9. Verfahren zur Zustandserkennung nach Anspruch 7 oder 8,
**dadurch gekennzeichnet,**
**daß** im Falle der Zustände die auf eine schlechte und/oder keine Performance des Systems hinweisen, ein Signal in den Innenraum des Kraftfahrzeugs übertragen wird, das den Fahrer des Kraftfahrzeugs darauf aufmerksam macht, daß das System keine optimale Performance liefert und/oder daß keine Funktion des Systems möglich ist.

10. Verfahren zur Zustandserkennung nach Anspruch 9,
**dadurch gekennzeichnet,**
**daß** das Signal eine optische Anzeige und/oder ein akustisches Signal ist.

11. Verfahren zur Zustandserkennung nach Anspruch 10,
**dadurch gekennzeichnet,**
**daß** die optische Anzeige eine Serviceanzeige ist.

12. Verfahren zur Zustandserkennung nach Anspruch 1,
**dadurch gekennzeichnet,**
**daß** das System zur automatischen Längs- und/oder Querregelung bei einem Kraftfahrzeug in Abhängigkeit von dem wahrscheinlichen Zustand (P) des Systems deaktiviert wird.

13. Vorrichtung zur Zustandserkennung bei einem System zur automatischen Längs- und/oder Querregelung bei einem Kraftfahrzeug, arbeitend nach dem Radarprinzip und/oder dem Lidarprinzip, zur Verschmutzungs- und/oder Blindheitserkennung eines Sensors, zur Durchführung des Verfahrens nach einem der Ansprüche 1 bis 12.

## Claims

1. Method for detecting states in a system for effecting automatic longitudinal and/or transverse control in a motor vehicle, operating according to the radar principle and/or the lidar principle, for detecting soiling and/or blindness of a sensor, the detection of states being dependent on at least two indicators (In) which are formed from the signals which are received and/or emitted by the sensor,
**characterized**
- **in that** the at least two indicators (Iₙ) are weighted with weighting factors (aₙ),
- **in that** the weighted indicators are logically linked to a single probability (V) which provides information on the probable state (P) of the system,
- **in that** the further evaluation of the probability (V) is performed using a threshold value method in that in each case two threshold values (S1_{1/2}, S2_{1/2}) are provided for two driving situations (F₁, F₂).

2. Method for detecting states according to Claim 1, **characterized in that** the probability (V) assumes values between zero and one.

3. Method for detecting states according to Claim 1 or 2, **characterized in that** the weighting factors (aₙ) are dependent on the following two driving situations (F₁, F₂):
- the system detects another motor vehicle which is used as the target object for a control operation;
- the system does not detect another motor vehicle which is used as the target object for a control operation.

4. Method for detecting states according to Claim 1, **characterized in that** three states (P) of the system are distinguished as a function of the probability (V):
- 1 ≥ V ≥ S1_{1/2}:
the system supplies optimum performance;
- S1_{1/2} > V ≥ S2_{1/2}:
the performance of the system is not optimum;
- S2_{1/2} > V ≥ 0:
it is hot possible for the system to function.

5. Method for detecting states according to Claim 1, **characterized in that** the threshold value method provides a threshold value (S3_{1/2}) for each of the two driving situations (F₁, F₂).

6. Method for detecting states according to Claim 5, **characterized in that** two states (P) of the system are distinguished as a function of the probability (V):
- 1 ≥ V ≥ S3_{1/2}:
the system supplies optimum performance;
- S3_{1/2} > V ≥ 0:
it is not possible for the system to function.

7. Method for detecting states according to Claim 4 or 6, **characterized in that** a possible state (P) is not assumed to be determined until the result is present for a predetermined time period (T).

8. Method for detecting states according to Claim 7, **characterized in that** the predetermined time period (T) is reached either
- **in that** a time measurement is set to zero if the previously determined downward transgression of the threshold value is no longer present in a measuring cycle or
- **in that** a timer is incremented if the downward transgression of the threshold value is present in a measuring cycle, and is decremented if the downward transgression of the threshold value is not present in a measuring cycle, the timer not dropping below the value zero.

9. Method for detecting states according to Claim 7 or 8, **characterized in that**, in the case of states which point to a poor performance and/or no performance of the system, a signal is transmitted into the interior of the motor vehicle which alerts the driver of the motor vehicle to the fact that the system is not supplying an optimum performance and/or that it is not possible for the system to function.

10. Method for detecting states according to Claim 9, **characterized in that** the signal is a visual display and/or an audible signal.

11. Method for detecting states according to Claim 10, **characterized in that** the visual display is a service display.

12. Method for detecting states according to Claim 1, **characterized in that** the system for automatic longitudinal and/or transverse control in a motor vehicle is deactivated as a function of the probable state (P) of the system.

13. Device for detecting states in a system for automatic longitudinal and/or transverse control in a motor vehicle, operating according to the radar principle and/or the lidar principle, for detecting soiling and/or blindness of a sensor, for carrying out the method according to one of Claims 1 to 12.

## Revendications

1. Procédé de reconnaissance d'état dans un système de régulation longitudinale et/ou transversale automatique installée dans un véhicule automobile, fonctionnant selon le principe du radar et/ou du lidar, pour reconnaître l'encrassage et/ou l'aveuglement d'un capteur,
la reconnaissance d'état dépendant au moins de deux indicateurs (Iₙ) formés à partir des signaux reçus et/ou émis par le capteur,
**caractérisé en ce que**
- au moins les deux indicateurs (Iₙ) sont pondérés avec des coefficients de pondération (aₙ) ;
- les indicateurs pondérés sont combinés selon une unique vraisemblance (V) qui donne une information sur l'état vraisemblable (P) du système ;
- la suite de l'exploitation de la vraisemblance (V) se fait à l'aide d'un procédé à seuil prévu pour deux situations de conduite (F₁, F₂) suivant chaque fois deux valeurs de seuil (S1_{1/2}/S2_{1/2}).

2. Procédé de reconnaissance d'état selon la revendication 1,
**caractérisé en ce que**
la vraisemblance (V) prend des valeurs comprises entre 0 et l'unité.

3. Procédé de reconnaissance d'état selon la revendication 1 ou 2,
**caractérisé en ce que**
- les coefficients de pondération (aₙ) dépendent des deux situations de conduites suivantes (F₁, F₂) ;
- le système détecte un autre véhicule automobile utilisé comme objet cible pour une régulation ;
- le système ne détecte pas un autre véhicule automobile qui s'utilise comme objet cible pour une régulation.

4. Procédé de reconnaissance d'état selon la revendication 1,
**caractérisé en ce que**
en fonction de la vraisemblance (V) on distingue trois états (P) du système ;
- 1 ≥ V ≥ S1_{1/2}
le système assure une performance optimale ;
- Sl_{1/2} > V ≥ S2_{1/2}
la performance du système n'est pas optimale ;
- S2_{1/2} > V ≥ 0
le système ne peut pas fonctionner.

5. Procédé de reconnaissance d'état selon la revendication 1,
**caractérisé en ce que**
le procédé à seuil prévoit un seuil (S3_{1/2}) pour chacune des deux situations de conduite (F1,F2).

6. Procédé de reconnaissance d'état selon la revendication 5,
**caractérisé en ce que**
en fonction de la vraisemblance (V) on distingue deux états (P) du système :
- 1 ≥ V ≥ S3_{1/2}
le système assure une performance optimale
- S3_{1/2} ≥ V ≥ 0
le système ne peut pas fonctionner.

7. Procédé de reconnaissance d'état selon la revendication 4 ou 6,
**caractérisé en ce qu'**
un état possible (P) n'est pris comme déterminé que si le résultat persiste pendant une durée prédéterminée (T).

8. Procédé de reconnaissance d'état selon la revendication 7,
**caractérisé en ce qu'**
on atteint une durée prédéterminée (T) **en ce que** soit :
- on met à 0 une mesure de temps lorsque dans un cycle de mesure on n'est plus en présence du dépassement vers le bas du seuil, comme prédéterminé précédemment ; ou
- on incrémente un compteur de temps lorsqu'on dépasse vers le bas un seuil dans un cycle de mesure et on décrémente si le dépassement vers le bas du seuil de mesure n'existe pas dans un cycle de mesure ;
- le compteur de temps ne descendant pas en dessous de la valeur O.

9. Procédé de reconnaissance d'état selon la revendication 7 ou 8,
**caractérisé en ce que**
pour des états qui indiquent une mauvaise performance et/ou pas de performance du système, un signal est transmis à l'habitacle du véhicule pour attirer l'attention du conducteur du véhicule sur le fait que le système ne fournit pas de performance optimale et/ou qu'il n'est pas possible que le système puisse fonctionner.

10. Procédé de reconnaissance d'état selon la revendication 9,
**caractérisé en ce que**
le signal est un affichage optique et/ou un signal acoustique.

11. Procédé de reconnaissance d'état selon la revendication 10,
**caractérisé en ce que**
l'affichage optique est un affichage de service.

12. Procédé de reconnaissance d'état selon la revendication 1,
**caractérisé en ce que**
le signal de régulation automatique longitudinal et/ou transversal est désactivé dans un véhicule automobile en fonction de l'état probable (P) du système.

13. Dispositif de reconnaissance d'état dans un système de régulation automatique longitudinal et/ou transversal d'un véhicule automobile fonctionnant selon le principe du radar et/ou du lidar, pour desceller l'encrassage et/ou l'aveuglement d'un capteur pour la mise en oeuvre du procédé selon l'une des revendications 1 à 12.
